(19) Europäisches Patentamt / European Patent Office / Office européen des brevets

(11) **EP 3 249 891 B1**

(12) **EUROPEAN PATENT SPECIFICATION**

(45) Date of publication and mention
of the grant of the patent:
**08.05.2019 Bulletin 2019/19**

(21) Application number: **17172997.3**

(22) Date of filing: **26.05.2017**

(51) Int Cl.:
*H04J 3/02* (2006.01)          *H04W 56/00* (2009.01)
*H04J 3/06* (2006.01)          *H04L 29/06* (2006.01)
*H04L 29/08* (2006.01)        *H04L 12/801* (2013.01)

(54) **FILE DOWNLOAD METHOD AND PLAY DEVICE**

VERFAHREN ZUM HERUNTERLADEN VON DATEIEN UND WIEDERGABEVORRICHTUNG

PROCÉDÉ DE TÉLÉCHARGEMENT DE FICHIERS ET DISPOSITIF DE LECTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2016 CN 201610370054**

(43) Date of publication of application:
**29.11.2017 Bulletin 2017/48**

(73) Proprietor: **Huawei Technologies Co., Ltd.
Longgang District
Shenzhen, Guangdong 518129 (CN)**

(72) Inventor: **LIANG, Wei
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**US-A1- 2011 213 827      US-A1- 2013 095 806**

EP 3 249 891 B1

Description

## TECHNICAL FIELD

The present invention relates to the communications field, and in particular, to a file download method and a play device.

## BACKGROUND

When a play device that uses a player needs to download a file from a media server, the play device may establish a connection with the media server, and downloads the file from the media server in a single connection download manner. However, because of network factors such as a packet loss, in the single connection download manner, current physical bandwidth cannot be fully used, and a download speed is relatively low.

Currently, the play device may use a multi-connection manner, that is, establish multiple connections to download the file from the media server in parallel. This can effectively increase the download speed, and more effectively use the current physical bandwidth. When the file is downloaded in parallel by using the multiple connections, the file is divided into blocks to be downloaded, and each data block is corresponding to one independent connection. For example, a size of a to-be-downloaded file is 100 MB, and user equipment uses three connections to download the to-be-downloaded file in parallel. If a size of each data block is 10 MB, the first connection is used to download a data block from 0 MB to 10 MB, the second connection is used to download a data block from 10 MB to 20 MB, and the third connection is used to download a data block from 20 MB to 30 MB. Downloading is performed in the three connections at the same time. After downloading is completed in a specific connection, the connection is continuously used to download a subsequent data block, such as a data block from 40 MB to 50 MB.

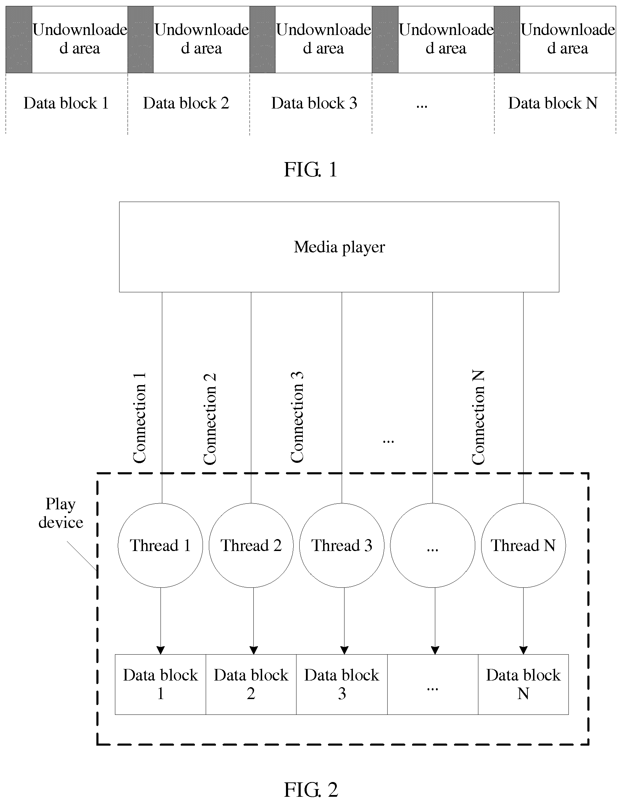

A streaming media player has a specific particularity when a file is downloaded in parallel. FIG. 1 is a schematic diagram of a status of multi-connection parallel download. Because data blocks processed by the player need to be continuous, if downloading of a data block 1 is not completed, although downloading of a data block 2 and a data block 3 is completed, data that can actually be decoded and played is only downloaded data in the data block 1. Therefore, if a divided data block is too large, downloading of a data block may take a long time, an advantage that a download speed of multi-connection parallel download is higher than that of a single connection cannot be shown, and play may be unsmooth.

US2011213827A1 discloses a process for requesting information, the process including generating a plurality of range requests using a client having a plurality of network interfaces, the range requests each corresponding to a data range of a data resource, transmitting, from the client having the plurality of network interfaces, a plurality of range requests to a server via the plurality of network interfaces, receiving, at the client and from the server, a plurality of segments via the plurality of network interfaces such that each segment is received via a network interface which transmitted the corresponding range request, each segment including a portion of the data resource, and reassembling the data resource using the plurality of segments. US2013095806A1 discloses that in a wireless communication device having a first and a second radio access interface for respectively communicating with a first and a second access network, a method for retrieving content comprises receiving a request for retrieval of content from a remote server and retrieving a first part of the requested content over a first radio access technology connection. When the retrieval of the first part is determined not to meet a required QoS threshold, the second radio access interface is activated.; A next part of the requested content to be retrieved is divided into a first portion for retrieval over the first radio access technology connection and a second portion for retrieval over a second radio access technology connection such that retrieval of the first and second portions are estimated to meet the required QoS threshold, and are retrieved over the first and second radio access technology connections, respectively.

## SUMMARY

Embodiments of the present invention provide a file download method and a play device according to the independent claims, so as to effectively improve smoothness when a player plays a media file. Further advantages can be achieved by the features disclosed in the dependent claims.

According to one aspect, a file download method, according to claim 1, is provided, including:
obtaining, by a play device when N data blocks of a file are downloaded from a server in parallel, a network parameter of at least one data block of the N data blocks downloaded in a current network environment, where N is a positive integer greater than or equal to 1; obtaining, by the play device after any one of the N data blocks is completely downloaded and before a next data block following the N data blocks starts to be downloaded, a size of the next data block according to the network parameter; and downloading, by the play device, the next data block from the server according to the size of the next data block.

In this way, before the play device downloads the data block, a size of a to-be-downloaded data block may be dynamically adjusted according to a network environment change, so as to improve play smoothness of a player.

Before the play device downloads the N data blocks of the file from the server in parallel, the method further includes: establishing, by the play device with the server before the N data blocks are downloaded, Transmission Control Protocol (TCP) connections respectively corresponding to the N data blocks; and establishing, by the play device with the server, Hypertext Transfer Protocol (HTTP) connections respectively corresponding to the N data blocks; where the network parameter includes an average speed of downloading the at least one data block, an average round-trip delay of signaling interaction when the play device establishes a TCP connection corresponding to the at least one data block, and an average round-trip delay of signaling interaction when the play device establishes an HTTP connection corresponding to the at least one data block.

In this way, because the play device establishes the TCP connection and the HTTP connection with the server before each data block is downloaded, a round-trip delay of signaling interaction may be obtained in a process of establishing the TCP connection and the HTTP connection by the play device with the server, and an average download speed may be obtained when the data block is downloaded, so as to represent a current network environment according to the round-trip delay of signaling interaction and the average speed when the data block is downloaded.

The obtaining a size of the next data block according to the network parameter includes: obtaining, by the play device, the size of the next data block according to a formula, where the formula is: $BlockSize = (T \times 1000 - D1 - D2) \times S/(8 \times 1000)$, where BlockSize represents the size of the next data block, T represents a preset download time for each data block of the N data blocks, D1 represents the average round-trip delay of signaling interaction when the TCP connection corresponding to the at least one data block is established, D2 represents the average round-trip delay of signaling interaction when the HTTP connection corresponding to the at least one data block is established, and S represents the average speed of downloading the at least one data block.

In this way, when the player downloads the data block by using multiple connections in parallel, the data block cannot be too large or too small. If it is predetermined that a download time for the data block remains Ts or around Ts in various network environments, a size of a next to-be-downloaded data block may be obtained according to a current network parameter and the preset download time T, so that a download time for the next to-be-downloaded data block remains around Ts as much as possible, thereby improving play smoothness of the player.

In a possible design, the at least one data block is a data block recently completely downloaded in the N data blocks before the next data block is downloaded, and is recorded as a first data block; the average speed of downloading the at least one data block is an average speed of downloading the first data block; the average round-trip delay of signaling interaction when the TCP connection corresponding to the at least one data block is established is a round-trip delay of signaling interaction when a TCP connection corresponding to the first data block is established; and the average round-trip delay of signaling interaction when the HTTP connection corresponding to the at least one data block is established is a round-trip delay of signaling interaction when an HTTP connection corresponding to the first data block is established.

In this way, when the data block recently completely downloaded in the N data blocks before the next data block is downloaded, that is, the first data block, is completely downloaded, an average speed of downloading a data block in a single connection in which the first data block is located, a signaling round-trip delay of a TCP connection before the first data block is downloaded, and a signaling round-trip delay of an HTTP connection before the first data block is downloaded may be obtained, so as to obtain a data block size of a next to-be-downloaded data block according to a network environment represented by a network parameter corresponding to the first data block.

In a possible design, the obtaining a size of the next data block according to the network parameter includes: obtaining, by the play device according to a correspondence between a preset network parameter and a size of a data block, a size of a data block corresponding to the network parameter as the size of the next data block.

In this way, a correspondence table of a correspondence between a network parameter and a size of a data block may be established. A size of a data block corresponding to a network parameter in a current network environment may be obtained directly by means of looking up the table, so that a size of a data block downloaded in parallel is adaptive to the current network environment.

According to another aspect, a play device, according to claim 4, is provided, including:

an obtaining unit, configured to obtain, when N data blocks of a file are downloaded from a server in parallel, a network parameter of at least one data block of the N data blocks downloaded in a current network environment; where the obtaining unit is further configured to obtain, after any one of the N data blocks is completely downloaded and before a next data block following the N data blocks starts to be downloaded, a size of the next data block according to the network parameter; and a download unit, configured to download the next data block from the server according to the size of the next data block.

The play device further includes: an establishment unit, configured to establish, with the server before the N data blocks are downloaded, Transmission Control Protocol (TCP) connections respectively corresponding to the N data blocks; where the establishment unit is further configured to establish, with the server, Hypertext Transfer Protocol

(HTTP) connections respectively corresponding to the N data blocks; and the network parameter includes an average speed of downloading the at least one data block, an average round-trip delay of signaling interaction when the play device establishes a TCP connection corresponding to the at least one data block, and an average round-trip delay of signaling interaction when the play device establishes an HTTP connection corresponding to the at least one data block.

The obtaining unit is configured to: obtain the size of the next data block according to a formula, where the formula is: BlockSize = (T x 1000 - D1 - D2) x S/(8 x 1000), where BlockSize represents the size of the next data block, T represents a preset download time for each data block of the N data blocks, D1 represents the average round-trip delay of signaling interaction when the TCP connection corresponding to the at least one data block is established, D2 represents the average round-trip delay of signaling interaction when the HTTP connection corresponding to the at least one data block is established, and S represents the average speed of downloading the at least one data block.

In a possible design, the at least one data block is a first data block recently completely downloaded in the N data blocks before the next data block is downloaded; the average speed of downloading the at least one data block is an average speed of downloading the first data block; the average round-trip delay of signaling interaction when the TCP connection corresponding to the at least one data block is established is a round-trip delay of signaling interaction when a TCP connection corresponding to the first data block is established; and the average round-trip delay of signaling interaction when the HTTP connection corresponding to the at least one data block is established is a round-trip delay of signaling interaction when an HTTP connection corresponding to the first data block is established.

In a possible design, the obtaining unit is configured to obtain, according to a correspondence between a preset network parameter and a size of a data block, a size of a data block corresponding to the network parameter as the size of the next data block.

The embodiments of the present invention provide a file download method and a play device. The play device obtains, when N data blocks of a file are downloaded from a server in parallel, a network parameter of at least one data block of the N data blocks downloaded in a current network environment; the play device obtains, after any one of the N data blocks is completely downloaded and before a next data block following the N data blocks starts to be downloaded, a size of the next data block according to the network parameter; and the play device downloads the next data block from the server according to the size of the next data block. In this way, before the play device downloads the data block, a size of a to-be-downloaded data block may be dynamically adjusted according to a network environment change, so as to effectively improve smoothness when a player plays a media file.

## BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a schematic diagram of a status of multi-connection parallel download;
FIG. 2 is a schematic structural diagram of a network of multi-connection parallel download;
FIG. 3 is a schematic flowchart of a file download method according to an embodiment of the present invention;
FIG. 4 is a schematic diagram of data block download according to an embodiment of the present invention;
FIG. 5 is a schematic structural diagram of a play device according to an embodiment of the present invention; and
FIG. 6 is a schematic structural diagram of a play device according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

FIG. 2 is a schematic structural diagram of a network of multi-connection parallel download. A play device may establish N connections in parallel with a media server to download a data block in parallel. Specifically, N threads may be correspondingly established in a player of the play device, and each thread establishes one independent connection with the media server to request a corresponding data block from the media server. As shown in FIG. 2, the player establishes the N threads: a thread 1, a thread 2, a thread 3, ..., and a thread N, and each thread is corresponding to one connection: the thread 1 is corresponding to a connection 1, the thread 2 is corresponding to a connection 2, the thread 3 is corresponding to a connection 3, ..., and the thread N is corresponding to a connection N.

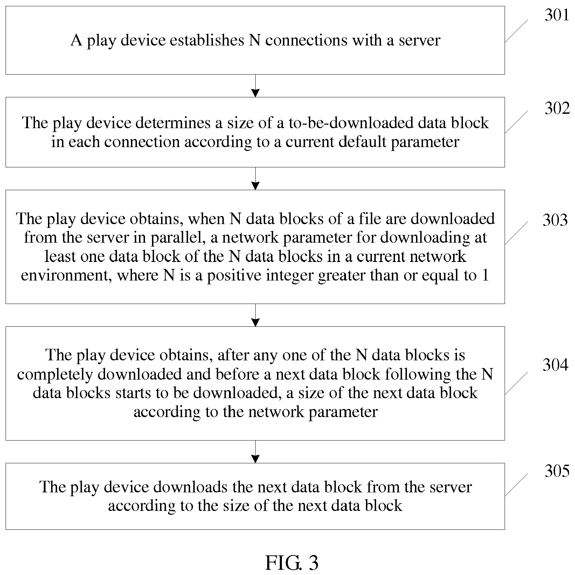

For a prior-art problem that play may be unsmooth because a size of a data block downloaded in each connection is fixed by default, an embodiment of the present invention provides a file download method. As shown in FIG. 3, the method includes the following steps.

301. A play device establishes N connections with a server.

The play device may be a personal computer (PC), a pad, a mobile phone, or another terminal. The server may be a media server, and is configured to implement a media resource function required by various services of the play device. For example, a player that is configured to play an audio or a video is installed in the play device, and the play device may play the audio or the video after requesting to download an audio or video file from a server end.

Before the play device needs to download a data block from the server in parallel, N threads may first be established, and N connections are established with the server by using the N threads. Specifically, after establishing the N threads, the play device may establish N TCP connections with the server by using the N threads. Specifically, a TCP connection is completed when the play device and the server perform signaling interaction of "three handshakes" by using the TCP protocol. Then, the play device establishes N HTTP connections with the server by using the HTTP protocol, where the HTTP protocol is an application based on the TCP protocol. That is, after each thread establishes a TCP connection, and establishes a corresponding HTTP connection, the play device may download data blocks corresponding to the N connections from the server by using the N connections. Before downloading each data block from the server, the play device needs to establish a corresponding HTTP connection with the server. That is, the play device establishes a separate HTTP connection when each data block is downloaded, and automatically releases the HTTP connection after completely processing this request, that is, downloading this data block. The TCP connection before the data block is downloaded may be established only once when initially established, or a TCP connection may be established before each data block is downloaded.

302. The play device determines a size of a to-be-downloaded data block in each connection according to a current default parameter.

A size of a data block when the data block is downloaded in each connection may be preset in the play device, for example, a size of each data block is preset to be 10 M. After establishing the N connections with the server, the play device may download N data blocks from the server in parallel according to the preset size of the data block. Alternatively, the play device obtains a size of a to-be-downloaded file from the server by using an HTTP request, and divides a size of a to-be-downloaded data block in each connection according to the size of the file. For example, a size of a to-be-downloaded file obtained by the play device is 100 M. When the play device establishes three connections with the server, the play device may divide the first three data blocks as 10 M respectively, and determine a start byte and an end byte of each data block. For example, the first connection is used to download bytes from 0 M to 10 M of the file, the second connection is used to download bytes from 10 M to 20 M of the file, the third connection is used to download bytes from 20 M to 30 M of the file, and bytes from 0 M to (10 M + 10 M + 10 M - 1) of the file are downloaded in the first three data blocks.

303. The play device obtains, when N data blocks of a file are downloaded from the server in parallel, a network parameter of at least one data block of the N data blocks downloaded in a current network environment, where N is a positive integer greater than or equal to 1.

The network parameter may include an average speed when the play device downloads the at least one data block, an average round-trip delay of signaling interaction when the play device establishes a TCP connection corresponding to the at least one data block, and an average round-trip delay of signaling interaction when the play device establishes an HTTP connection corresponding to the at least one data block. For example, when N is 5, the play device may download five data blocks in parallel. The play device may record an average speed of downloading the five data blocks, an average round-trip delay of signaling interaction when five TCP connections are established, and an average round-trip delay of signaling interaction when five HTTP connections are established. Alternatively, the play device records an average speed of downloading three of the data blocks, an average round-trip delay of signaling interaction when the three TCP connections are established, and an average round-trip delay of signaling interaction when the three HTTP connections are established.

For example, when the play device records a network parameter for three data blocks of the five data blocks, assuming that sizes of the three data blocks are respectively 10 M, an average speed of downloading the three data blocks may be an average value of a ratio of a size of downloaded data in each data block in a preset period of time to a preset time, and a unit is bps. For example, 2 M is downloaded in the first data block of the recorded three data blocks in 2s, 3 M is downloaded in the second data block in 2s, 4 M is downloaded in the third data block in 2s, and an average speed of downloading the three data blocks may be (2/2 + 3/2 + 4/2)/3 = 1.5, that is, 1.5 Mbps. The average round-trip delay of signaling interaction when the three TCP connections are established may be an average value of delays of signaling interaction when the three TCP connections are established, and a unit is ms. Signaling interaction of each TCP connection includes signaling interaction of "three handshakes" between the play device and the server. The average round-trip delay of signaling interaction when the three HTTP connections are established may be an average value of delays of signaling interaction when the three HTTP connections are established, and a unit is ms. Signaling interaction of each HTTP connection includes signaling interaction between sending an HTTP request and receiving a response from a server end by the play device.

Optionally, a network parameter of a single connection in the N connections may be obtained. For example, the at least one data block is a first data block recently completely downloaded in the N data blocks before the next data block is downloaded; the average speed of downloading the at least one data block is an average speed of downloading the first data block; the average round-trip delay of signaling interaction when the TCP connection corresponding to the at least one data block is established is a round-trip delay of signaling interaction when a TCP connection corresponding to the first data block is established; and the average round-trip delay of signaling interaction when the HTTP connection corresponding to the at least one data block is established is a round-trip delay of signaling interaction when an HTTP connection corresponding to the first data block is established.

The average speed is a ratio of a size of the first data block to a time of downloading the first data block, or the average speed is a ratio of a size of a downloaded data block of the first data block in a preset period of time to the preset period of time.

304. The play device obtains, after any one of the N data blocks is completely downloaded and before a next data block following the N data blocks starts to be downloaded, a size of the next data block according to the network parameter.

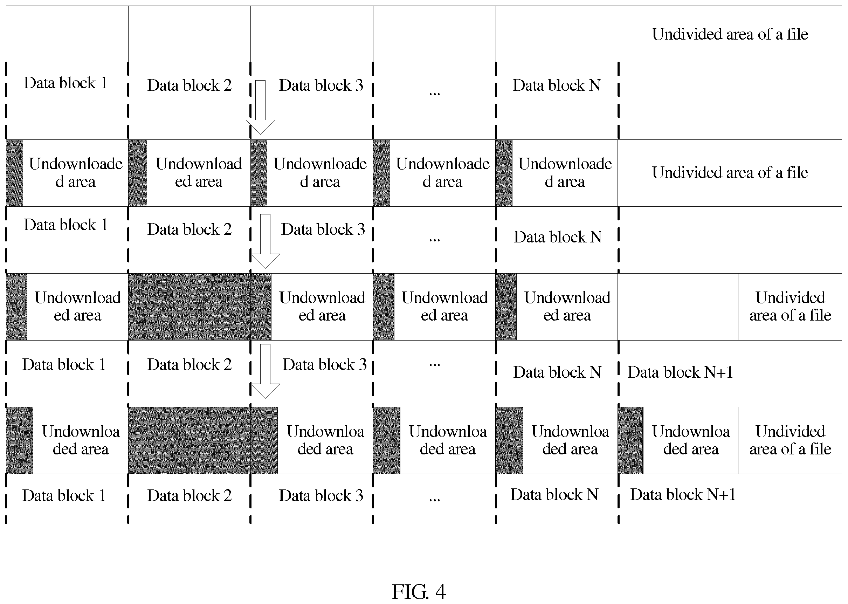

When any one of the N data blocks is completely downloaded, a thread corresponding to the any data block is in an idle state. In this case, the next data block may be continuously obtained from the server according to a connection corresponding to the thread. For example, FIG. 4 is a schematic diagram of data block download according to the present invention. When N is 5 and the play device downloads the first five data blocks of a file in parallel, if a data block corresponding to the second connection of the five connections is completely downloaded, the play device may continuously download the $(N+1)^{th}$, that is, the sixth data block in the second connection. The any data block herein refers to a data block recently completely downloaded in the N data blocks before the $(N+1)^{th}$ data block is downloaded. However, before the next data block following the N data blocks starts to be downloaded, the size of the next data block needs to be obtained according to the network parameter, that is, a size of the sixth data block is determined according to a current network status reflected by a network parameter for at least one data block of the first five data blocks.

Specifically, when the play device downloads the data block by using multiple connections in parallel, the data block cannot be too large or too small, and a download time for each data block cannot be too long. It is assumed that the download time for the data block is expected to remain around Ts in various network environments, and a problem that a data block divided by the play device is too large or too small may be relieved to some extent. It is assumed that the play device downloads the data block by using the HTTP protocol, and the play device may obtain a size of a next data block according to a formula. The formula is: BlockSize = (T x 1000 - D1 - D2) x S/(8 x 1000), where BlockSize represents the size of the next data block, T represents a preset download time for each data block of the N data blocks, D1 represents the average round-trip delay of signaling interaction when the TCP connection corresponding to the at least one data block is established, D2 represents the average round-trip delay of signaling interaction when the HTTP connection corresponding to the at least one data block is established, and S represents the average speed of downloading the at least one data block.

Derivation of the formula is as follows:

When an expected download time for a data block is Ts, or is T x 1000 when converted to ms, a total download time for a data block is (T x 1000) ms. When a size of a next data block is expressed as BlockSize, and a unit is byte, it is (BlockSize x 8) bps when converted to bit. Then (BlockSize x 8) is divided by an average download speed of the data block in a network parameter, that is, BlockSize x 8/S, and a time of a download process of the next data block may be obtained, and it is BlockSize x 8 x 1000/S when converted to ms. A time of a download process of a data block plus an average round-trip delay of signaling interaction when a TCP connection is established plus an average round-trip delay of signaling interaction when an HTTP connection is established, that is, BlockSize x 8 x 1000/S + D1 + D2, is the total download time (T x 1000) of the data block, that is, BlockSize x 8 x 1000/S + D1 + D2 = T x 1000. Therefore, the size of the next data block is BlockSize = (T x 1000 - D1 - D 2) x S/(8 x 1000).

Optionally, a correspondence table of a correspondence between a network parameter and a size of a data block may be established according to experimental data. When the network parameter is obtained, the size of the next data block may be obtained by means of looking up the table. This is not limited in the present invention.

305. The play device downloads the next data block from the server according to the size of the next data block.

When the size of the next data block is determined according to the obtained network parameter, the play device may establish a TCP connection and an HTTP connection with the server according to a thread in which the completely downloaded data block is located, so as to download and obtain the next data block.

It may be learned from the foregoing formula that for a user with high bandwidth, because a delay for establishing a TCP connection and an HTTP connection is relatively short, and a download speed of a single connection is relatively high, a size of an obtained data block is relatively large. For a user with low bandwidth, because a delay for establishing a TCP connection and an HTTP connection is relatively large, and a download speed of a single connection is relatively low, a size of an obtained data block is relatively small. Even for a same user, if network fluctuation occurs, a size of a data block is adjusted according to a network environment. However, a download time for the data block always remains around Ts, so that the size of the data block is adjusted according to the network environment to ensure smooth play.

Therefore, this embodiment of the present invention provides a file download method. A play device obtains, when N data blocks of a file are downloaded from a server in parallel, a network parameter of at least one data block of the N data blocks downloaded in a current network environment; the play device obtains, after any one of the N data blocks is completely downloaded and before a next data block following the N data blocks starts to be downloaded, a size of the next data block according to the network parameter; and the play device downloads the next data block from the server according to the size of the next data block. In this way, before the play device downloads the data block, a size of a to-be-downloaded data block may be dynamically adjusted according to a network environment change, so as to effectively improve smoothness when a player plays a media file.

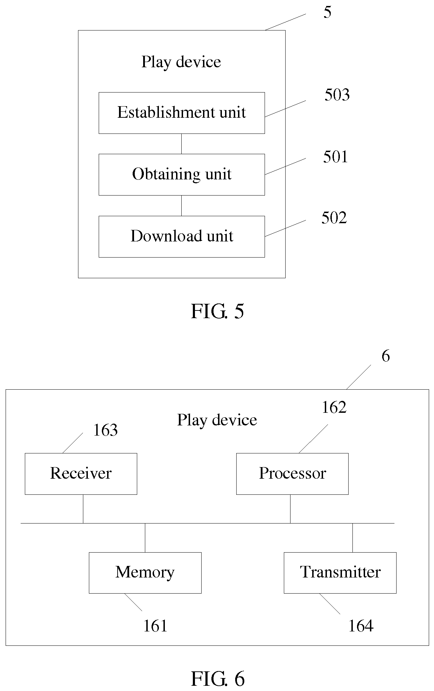

An embodiment of the present invention further provides a play device 5. As shown in FIG. 5, the play device 5 includes:

an obtaining unit 501, configured to obtain, when N data blocks of a file are downloaded from a server in parallel, a network parameter of at least one data block of the N data blocks downloaded in a current network environment, where N is a positive integer greater than or equal to 1; where

the obtaining unit 501 is further configured to obtain, after any one of the N data blocks is completely downloaded and before a next data block following the N data blocks starts to be downloaded, a size of the next data block according to the network parameter; and

a download unit 502, configured to download the next data block from the server according to the size of the next data block.

Optionally, the play device 5 further includes:

an establishment unit 503, configured to establish, with the server before the N data blocks are downloaded, Transmission Control Protocol TCP connections respectively corresponding to the N data blocks.

The establishment unit 503 is further configured to establish, with the server, Hypertext Transfer Protocol HTTP connections respectively corresponding to the N data blocks.

The network parameter includes an average speed of downloading the at least one data block, an average round-trip delay of signaling interaction when the play device establishes a TCP connection corresponding to the at least one data block, and an average round-trip delay of signaling interaction when the play device establishes an HTTP connection corresponding to the at least one data block.

Optionally, the obtaining unit 501 is configured to:

obtain the size of the next data block according to a formula, where the formula is:

$$\text{BlockSize} = (T \times 1000 - D1 - D2) \times S/(8 \times 1000),$$

where

BlockSize represents the size of the next data block, T represents a preset download time for each data block of the N data blocks, D1 represents the average round-trip delay of signaling interaction when the TCP connection corresponding to the at least one data block is established, D2 represents the average round-trip delay of signaling interaction when the HTTP connection corresponding to the at least one data block is established, and S represents the average speed of downloading the at least one data block.

Optionally, the at least one data block is a first data block recently completely downloaded in the N data blocks before the next data block is downloaded.

The average speed of downloading the at least one data block is an average speed of downloading the first data block.

The average round-trip delay of signaling interaction when the TCP connection corresponding to the at least one data block is established is a round-trip delay of signaling interaction when a TCP connection corresponding to the first data block is established.

The average round-trip delay of signaling interaction when the HTTP connection corresponding to the at least one data block is established is a round-trip delay of signaling interaction when an HTTP connection corresponding to the first data block is established.

Optionally, the obtaining unit 501 is configured to obtain, according to a correspondence between a preset network parameter and a size of a data block, a size of a data block corresponding to the network parameter as the size of the next data block.

This embodiment of the present invention provides a play device. The play device obtains, when N data blocks of a file are downloaded from a server in parallel, a network parameter of at least one data block of the N data blocks downloaded in a current network environment; the play device obtains, after any one of the N data blocks is completely downloaded and before a next data block following the N data blocks starts to be downloaded, a size of the next data block according to the network parameter; and the play device downloads the next data block from the server according to the size of the next data block. In this way, before the play device downloads the data block, a size of a to-be-downloaded data block may be dynamically adjusted according to a network environment change, so as to effectively improve smoothness when a player plays a media file.

FIG. 6 is a schematic structural diagram of a play device 6 according to an embodiment of the present invention. The play device 6 includes a memory 161, a processor 162, a receiver 163, and a transmitter 164. The processor 162 is configured to control and manage an action of the play device. For example, the processor 162 is configured to assist the play device in performing steps 301 to 305 in FIG. 3, and/or configured for another process of a technique described in the embodiments of the present invention. The memory 161 is configured to store program code and data of the play device. A network interface is configured to support communication between the play device and another network entity, including the receiver 163 and the transmitter 164. For example, the network interface is configured to support communication between the play device and a server.

Specifically, when implementing this embodiment of the present invention, the processor 162 may be configured to obtain, when N data blocks of a file are downloaded from a server in parallel, a network parameter of at least one data block of the N data blocks downloaded in a current network environment, where N is a positive integer greater than or equal to 1; when implementing this embodiment of the present invention, the processor 162 may be configured to obtain, after any one of the N data blocks is completely downloaded and before a next data block following the N data blocks starts to be downloaded, a size of the next data block according to the network parameter; and when implementing this embodiment of the present invention, the receiver 163 may be configured to download the next data block from the server according to the size of the next data block.

The processor 162 is equivalent to the obtaining unit 501 in the embodiment shown in FIG. 5. For a specific implementation manner, refer to the obtaining unit 501. The receiver 163 is equivalent to the download unit 502 in the embodiment shown in FIG. 5. For a specific implementation manner, refer to the download unit 502.

This embodiment of the present invention provides a play device. The play device obtains, when N data blocks of a file are downloaded from a server in parallel, a network parameter of at least one data block of the N data blocks downloaded in a current network environment; the play device obtains, after any one of the N data blocks is completely downloaded and before a next data block following the N data blocks starts to be downloaded, a size of the next data block according to the network parameter; and the play device downloads the next data block from the server according to the size of the next data block. In this way, before the play device downloads the data block, a size of a to-be-downloaded data block may be dynamically adjusted according to a network environment change, so as to effectively improve smoothness when a player plays a media file.

In the several embodiments provided in the present application, it should be understood that the disclosed terminal and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

**Claims**

1. A file download method, comprising:

    establishing, by a play device with a server before N data blocks of a file are downloaded, N Transmission Control Protocol, TCP, connections respectively corresponding to the N data blocks;
    establishing, by the play device with the server, N Hypertext Transfer Protocol, HTTP, connections respectively corresponding to the N data blocks;
    obtaining (303), by the play device when the N data blocks are downloaded from the server in parallel, a network parameter of at least one data block of the N data blocks downloaded in a current network environment, wherein N is a positive integer greater than or equal to 1, and wherein the network parameter comprises an average speed of downloading the at least one data block, an average round-trip delay of signaling interaction when the play device establishes a TCP connection corresponding to the at least one data block, and an average round-trip delay of signaling interaction when the play device establishes an HTTP connection corresponding to the at least one data block;
    obtaining (304), by the play device after any one of the N data blocks is completely downloaded and before a next data block following the N data blocks starts to be downloaded, a size of the next data block according to the network parameter; and
    downloading (305), by the play device, the next data block from the server according to the size of the next data block, wherein
    the obtaining (304) a size of the next data block according to the network parameter comprises:
    obtaining, by the play device, the size of the next data block according to a formula, wherein the formula is:

$$BlockSize = (T \times 1000 - D1 - D2) \times S/(8 \times 1000),$$

    wherein
    BlockSize represents the size of the next data block, T represents a preset download time for each data block of the N data blocks, D1 represents the average round-trip delay of signaling interaction when the TCP connection corresponding to the at least one data block is established, D2 represents the average round-trip delay of signaling interaction when the HTTP connection corresponding to the at least one data block is established, and S represents the average speed of downloading the at least one data block.

2. The method according to claim 1, wherein the at least one data block is a first data block recently completely downloaded in the N data blocks before the next data block is downloaded;
    the average speed of downloading the at least one data block is an average speed of downloading the first data block;
    the average round-trip delay of signaling interaction when the TCP connection corresponding to the at least one data block is established is a round-trip delay of signaling interaction when a TCP connection corresponding to the first data block is established; and
    the average round-trip delay of signaling interaction when the HTTP connection corresponding to the at least one data block is established is a round-trip delay of signaling interaction when an HTTP connection corresponding to the first data block is established.

3. The method according to claim 1, wherein the obtaining (304) a size of the next data block according to the network parameter comprises:
    obtaining, by the play device according to a correspondence between a preset network parameter and a size of a data block, a size of a data block corresponding to the network parameter as the size of the next data block.

4. A play device, comprising:

an establishment unit (503), configured to establish, with a server before N data blocks of a file are downloaded, N Transmission Control Protocol, TCP, connections respectively corresponding to the N data blocks; wherein the establishment unit (503) is further configured to establish, with the server, N Hypertext Transfer Protocol, HTTP, connections respectively corresponding to the N data blocks;

an obtaining unit (501), configured to obtain, when the N data blocks are downloaded from the server in parallel, a network parameter of at least one data block of the N data blocks downloaded in a current network environment, wherein N is a positive integer greater than or equal to 1, wherein the network parameter comprises an average speed of downloading the at least one data block, an average round-trip delay of signaling interaction when the play device establishes a TCP connection corresponding to the at least one data block, and an average round-trip delay of signaling interaction when the play device establishes an HTTP connection corresponding to the at least one data block; wherein

the obtaining unit (501) is further configured to obtain, after any one of the N data blocks is completely downloaded and before a next data block following the N data blocks starts to be downloaded, a size of the next data block according to the network parameter; and

a download unit (502), configured to download the next data block from the server according to the size of the next data block,

wherein: the obtaining unit (501) is configured to:

obtain the size of the next data block according to a formula, wherein the formula is:

$$BlockSize = (T \times 1000 - D1 - D2) \times S/(8 \times 1000),$$

wherein

BlockSize represents the size of the next data block, T represents a preset download time for each data block of the N data blocks, D1 represents the average round-trip delay of signaling interaction when the TCP connection corresponding to the at least one data block is established, D2 represents the average round-trip delay of signaling interaction when the HTTP connection corresponding to the at least one data block is established, and S represents the average speed of downloading the at least one data block.

5. The play device according to claim 4, wherein the at least one data block is a first data block recently completely downloaded in the N data blocks before the next data block is downloaded;
the average speed of downloading the at least one data block is an average speed of downloading the first data block;
the average round-trip delay of signaling interaction when the TCP connection corresponding to the at least one data block is established is a round-trip delay of signaling interaction when a TCP connection corresponding to the first data block is established; and
the average round-trip delay of signaling interaction when the HTTP connection corresponding to the at least one data block is established is a round-trip delay of signaling interaction when an HTTP connection corresponding to the first data block is established.

6. The play device according to claim 5, wherein the obtaining unit (501) is configured to obtain, according to a correspondence between a preset network parameter and a size of a data block, a size of a data block corresponding to the network parameter as the size of the next data block.

## Patentansprüche

1. Datei-Downloadverfahren, umfassend:

Herstellen von N "Transmission Control Protocol", TCP, -Anschlüssen, die jeweils den N Datenblöcken entsprechen, durch eine Spielevorrichtung mit einem Server, bevor N Datenblöcke einer Datei heruntergeladen werden;
Herstellen von N "Hypertext Transfer Protocol", HTTP, - Anschlüssen, die jeweils den N Datenblöcken entsprechen, durch die Spielevorrichtung mit dem Server;
Erhalten (303) eines Netzwerkparameters wenigstens eines Datenblocks der heruntergeladenen N Datenblöcke in einer aktuellen Netzwerkumgebung durch die Spielevorrichtung, wenn die N Datenblöcke vom dem Server parallel heruntergeladen werden, wobei N eine positive ganze Zahl größer als oder gleich 1 ist und wobei der Netzwerkparameter eine durchschnittliche Download-Geschwindigkeit des wenigstens einen Datenblocks, eine durchschnittliche Umlaufzeit der Signalinteraktion, wenn die Spielevorrichtung einen TCP-Anschluss, der wenigstens einem Datenblock entspricht, und eine durchschnittliche Umlaufzeit der Signalinteraktion, wenn die Spielevorrichtung einen dem wenigstens einen Datenblock entsprechenden HTTP-Anschluss herstellt, umfasst; Erhalten (304) einer Größe des nächsten Datenblocks gemäß dem Netzwerkparameter durch die Spielevorrichtung, nachdem irgendeiner einer N Datenblöcke komplett heruntergeladen ist und bevor ein nächster Datenblock, der den N Datenblöcken folgt, beginnt, heruntergeladen zu werden; und

Herunterladen (305) des nächsten Datenblocks vom Server gemäß der Größe des nächsten Datenblocks durch die Spielevorrichtung,

wobei das Erhalten (304) einer Größe des nächsten Datenblocks gemäß dem Netzwerkparameter umfasst: Erhalten der Größe des nächsten Datenblocks durch die Spielevorrichtung gemäß einer Formel, wobei die Formel lautet:

$$\text{BlockGröße} = (T \times 1000 - D1 - D2) \times S/(8 \times 1000),$$

wobei

die BlockGröße die Größe des nächsten Datenblocks darstellt, T eine voreingestellte Download-Zeit für jeden Datenblock der N Datenblöcke darstellt, D1 die durchschnittliche Umlaufzeit der Signalinteraktion darstellt, wenn der dem wenigstens einen Datenblock entsprechende TCP-Anschluss hergestellt ist, D2 die durchschnittliche Umlaufzeit der Signalinteraktion, wenn der dem wenigstens einen Datenblock entsprechende HTTP-Anschluss hergestellt ist, darstellt und S die durchschnittliche Download-Geschwindigkeit des wenigstens einen Datenblocks darstellt.

2. Verfahren nach Anspruch 1, wobei der wenigstens eine Datenblock ein erster Datenblock ist, der vor kurzem komplett in den N Datenblöcken heruntergeladen wurde, bevor der nächste Datenblock heruntergeladen wird; die durchschnittliche Download-Geschwindigkeit des wenigstens einen Datenblocks eine durchschnittliche Download-Geschwindigkeit des ersten Datenblocks ist; die durchschnittliche Umlaufzeit der Signalinteraktion, wenn der dem wenigstens einen Datenblock entsprechende TCP-Anschluss hergestellt ist, eine Umlaufzeit der Signalinteraktion ist, wenn ein dem ersten Datenblock entsprechender TCP-Anschluss hergestellt ist; und die durchschnittliche Umlaufzeit der Signalinteraktion, wenn der dem wenigstens einen Datenblock entsprechende HTTP-Anschluss hergestellt ist, eine Umlaufzeit der Signalinteraktion ist, wenn ein dem ersten Datenblock entsprechender HTTP-Anschluss hergestellt ist.

3. Verfahren nach Anspruch 1, wobei das Erhalten (304) einer Größe des nächsten Datenblocks gemäß dem Netzwerkparameter umfasst:
Erhalten einer Größe eines dem Netzwerkparameter entsprechenden Datenblocks, als die Größe des nächsten Datenblocks durch die Spielevorrichtung gemäß einer Entsprechung zwischen einem voreingestellten Netzwerkparameter und einer Größe eines Datenblocks.

4. Spielevorrichtung, umfassend:

eine Erstellungseinheit (503), die konfiguriert ist, um mit einem Server, bevor N Datenblöcke einer Datei heruntergeladen werden, N "Transmission Control Protocol", TCP, -Anschlüsse herzustellen, die jeweils den N Datenblöcken entsprechen; wobei die Erstellungseinheit (503) weiterhin konfiguriert ist, um mit dem Server N "Hypertext Transfer Protocol", HTTP, -Anschlüsse herzustellen, die jeweils N Datenblöcken entsprechen;
eine Empfängereinheit (501), die konfiguriert ist, um, wenn die N Datenblöcke vom Server parallel heruntergeladen sind, einen Netzwerkparameter wenigstens eines Datenblocks der N Datenblöcke in einer aktuellen Netzwerkumgebung heruntergeladen sind, zu erhalten, wobei N eine positive ganze Zahl größer als oder gleich 1 ist, wobei der Netzwerkparameter eine durchschnittliche Download-Geschwindigkeit des wenigstens einen Datenblocks, eine durchschnittliche Umlaufzeit der Signalinteraktion, wenn die Spielevorrichtung eine dem wenigstens einen Datenblock entsprechende TCP-Verbindung herstellt, und eine durchschnittliche Umlaufzeit der Signalinteraktion, wenn die Spielevorrichtung einen dem wenigstens einen Datenblock entsprechenden HTTP-Anschluss herstellt, umfasst; wobei
die Empfängereinheit (501) weiterhin konfiguriert ist, um eine Größe des nächsten Datenblocks gemäß dem Netzwerkparameter zu erhalten, nachdem einer der N Datenblöcke komplett heruntergeladen ist und bevor ein nächster Datenblock, der den N Datenblöcken folgt, beginnt, heruntergeladen zu werden; und

eine Download-Einheit (502), die konfiguriert ist, um den nächsten Datenblock vom Server gemäß der Größe des nächsten Datenblocks herunterzuladen,
wobei:
die Empfängereinheit (501) konfiguriert ist, um:
die Größe des nächsten Datenblocks gemäß einer Formel zu erhalten, wobei die Formel lautet:

$$\text{BlockGröße} = (T \times 1000 - D1 - D2) \times S/(8 \times 1000),$$

wobei

BlockGröße die Größe des nächsten Datenblocks darstellt, T eine voreingestellte Download-Zeit für jeden Datenblock der N Datenblöcke darstellt, D1 die durchschnittliche Umlaufzeit der Signalinteraktion, wenn der dem wenigstens einen Datenblock entsprechende TCP-Anschluss hergestellt ist, darstellt, D2 die durchschnittliche Umlaufzeit der Signalinteraktion, wenn der dem wenigstens einen Datenblock entsprechende HTTP-Anschluss hergestellt ist, darstellt, und S die durchschnittliche Download-Geschwindigkeit des wenigstens einen Datenblocks darstellt.

**5.** Spielevorrichtung nach Anspruch 4, wobei der wenigstens eine Datenblock ein erster Datenblock ist, der kürzlich komplett in die N Datenblöcke heruntergeladen wurde, bevor der nächste Datenblock heruntergeladen wurde;
die durchschnittliche Download-Geschwindigkeit des wenigstens einen Datenblocks eine durchschnittliche Download-Geschwindigkeit des ersten Datenblocks ist;
die durchschnittliche Umlaufzeit der Signalinteraktion, wenn der dem wenigstens einen Datenblock entsprechende TCP-Anschluss hergestellt ist, eine Umlaufzeit der Signalinteraktion ist, wenn ein dem ersten Datenblock entsprechender TCP-Anschluss hergestellt ist; und
die durchschnittliche Umlaufzeit der Signalinteraktion, wenn der dem wenigstens einen Datenblock entsprechende HTTP-Anschluss hergestellt ist, eine Umlaufzeit der Signalinteraktion ist, wenn ein dem ersten Datenblock entsprechender HTTP-Anschluss hergestellt ist.

**6.** Spielevorrichtung gemäß Anspruch 5, wobei die Empfängereinheit (501) konfiguriert ist, um gemäß einer Entsprechung zwischen einem voreingestellten Netzwerkparameter und einer Größe eines Datenblocks, eine Größe eines dem Netzwerkparameter als die Größe des nächsten Datenblocks entsprechenden Datenblocks zu erhalten.

**Revendications**

**1.** Procédé de téléchargement de fichier, comprenant :

l'établissement, par un dispositif de lecture comportant un serveur avant que N blocs de données d'un fichier soient téléchargés, de N connexions de protocole de contrôle de transmission, TCP, correspondant respectivement aux N blocs de données ;
l'établissement, par le dispositif de lecture comportant un serveur, de connexions de protocole de transfert hypertexte, HTTP, correspondant respectivement aux N blocs de données ;
l'obtention (303), par le dispositif de lecture lorsque les N blocs de données sont téléchargés depuis le serveur en parallèle, d'un paramètre de réseau d'au moins un bloc de données des N blocs de données téléchargés dans un environnement de réseau courant, dans lequel N est un entier positif égal ou supérieur à 1, et dans lequel le paramètre de réseau comprend une vitesse moyenne de téléchargement de l'au moins un bloc de données, une durée aller-retour moyenne de d'interaction de signalisation lorsque le dispositif de lecture établit une connexion TCP correspondant à l'au moins un bloc de données, et une durée aller-retour moyenne d'interaction de signalisation lorsque le dispositif de lecture établit une connexion HTTP correspondant à l'au moins un bloc de données ;
l'obtention (304), par le dispositif de lecture après que l'un quelconque des N blocs de données est complètement téléchargé et avant qu'un bloc de données suivant à la suite des N blocs de données commence à être téléchargé, d'une taille du bloc de données suivant en fonction du paramètre de réseau ; et
le téléchargement (305), par le dispositif de lecture, du bloc de données suivant depuis le serveur en fonction de la taille du bloc de données suivant,
dans lequel l'obtention (304) d'une taille du bloc de données suivant en fonction du paramètre de réseau comprend :

l'obtention, par le dispositif de lecture, de la taille du bloc de données suivant conformément à une formule, la formule étant :

$$TailleDeBloc = (T \times 1000 - D1 - D2) \times S/(8 \times 1000),$$

où
TailleDeBloc représente la taille du bloc de données suivant, T représente une durée de téléchargement prédéfinie pour chaque bloc de données des N blocs de données, D1 représente la durée aller-retour moyenne d'interaction de signalisation lorsque la connexion TCP correspondant à l'au moins un bloc de données est établie, D2 représente la durée aller-retour moyenne d'interaction de signalisation lorsque la connexion HTTP correspondant à l'au moins un bloc de données est établie et S représente la vitesse moyenne de téléchargement de l'au moins un bloc de données.

2. Procédé selon la revendication 1, dans lequel l'au moins un bloc de données est un premier bloc de données récemment complètement téléchargé parmi les N blocs de données avant que le bloc de données suivant soit téléchargé ;
la vitesse moyenne de téléchargement de l'au moins un bloc de données est une vitesse moyenne de téléchargement du premier bloc de données ;
la durée aller-retour moyenne d'interaction de signalisation lorsque la connexion TCP correspondant à l'au moins un bloc de données est établie est une durée aller-retour d'interaction de signalisation lorsqu'une connexion TCP correspondant au premier bloc de données est établie ; et
la durée aller-retour moyenne d'interaction de signalisation lorsque la connexion HTTP correspondant à l'au moins un bloc de données est établie est une durée aller-retour d'interaction de signalisation lorsqu'une connexion HTTP correspondant au premier bloc de données est établie.

3. Procédé selon la revendication 1, dans lequel l'obtention (304) d'une taille du bloc de données suivant en fonction du paramètre de réseau comprend :
l'obtention, par le dispositif de lecture en fonction d'une correspondance entre un paramètre de réseau prédéfini et une taille d'un bloc de données, d'une taille d'un bloc de données correspondant au paramètre de réseau comme taille du bloc de données suivant.

4. Dispositif de lecture, comprenant :

une unité d'établissement (503), configurée pour établir, avec un serveur avant que N blocs de données d'un fichier soient téléchargés, N connexions de protocole de contrôle de transmission, TCP, correspondant respectivement aux N blocs de données ; dans lequel
l'unité d'établissement (503) est en outre configurée pour établir, avec le serveur, N connexions de protocole de transfert hypertexte, HTTP, correspondant respectivement aux N blocs de données ;
une unité d'obtention (501), configurée pour obtenir, lorsque les N blocs de données sont téléchargés depuis le serveur en parallèle, un paramètre de réseau d'au moins un bloc de données des N blocs de données téléchargés dans un environnement de réseau courant, dans lequel N est un entier positif égal ou supérieur à 1, dans lequel le paramètre de réseau comprend une vitesse moyenne de téléchargement de l'au moins un bloc de données, une durée aller-retour moyenne de d'interaction de signalisation lorsque le dispositif de lecture établit une connexion TCP correspondant à l'au moins un bloc de données, et une durée aller-retour moyenne d'interaction de signalisation lorsque le dispositif de lecture établit une connexion HTTP correspondant à l'au moins un bloc de données ; dans lequel
l'unité d'obtention (501) est en outre configurée pour obtenir, après que l'un quelconque des N blocs de données est complètement téléchargé et avant qu'un bloc de données suivant à la suite des N blocs de données commence à être téléchargé, une taille du bloc de données suivant en fonction du paramètre de réseau ; et
une unité de téléchargement (502), configurée pour télécharger le bloc de données suivant depuis le serveur en fonction de la taille du bloc de données suivant, dans lequel :
l'unité d'obtention (501) est configurée pour :
obtenir la taille du bloc de données suivant conformément à une formule, la formule étant :

$$TailleDeBloc = (T \times 1000 - D1 - D2) \times S/(8 \times 1000),$$

où

TailleDeBloc représente la taille du bloc de données suivant, T représente une durée de téléchargement prédéfinie pour chaque bloc de données des N blocs de données, D1 représente la durée aller-retour moyenne d'interaction de signalisation lorsque la connexion TCP correspondant à l'au moins un bloc de données est établie, D2 représente la durée aller-retour moyenne d'interaction de signalisation lorsque la connexion HTTP correspondant à l'au moins un bloc de données est établie et S représente la vitesse moyenne de téléchargement de l'au moins un bloc de données.

5. Dispositif de lecture selon la revendication 4, dans lequel l'au moins un bloc de données est un premier bloc de données récemment complètement téléchargé parmi les N blocs de données avant que le bloc de données suivant soit téléchargé ;
la vitesse moyenne de téléchargement de l'au moins un bloc de données est une vitesse moyenne de téléchargement du premier bloc de données ;
la durée aller-retour moyenne d'interaction de signalisation lorsque la connexion TCP correspondant à l'au moins un bloc de données est établie est une durée aller-retour d'interaction de signalisation lorsqu'une connexion TCP correspondant au premier bloc de données est établie ; et
la durée aller-retour moyenne d'interaction de signalisation lorsque la connexion HTTP correspondant à l'au moins un bloc de données est établie est une durée aller-retour d'interaction de signalisation lorsqu'une connexion HTTP correspondant au premier bloc de données est établie.

6. Dispositif de lecture selon la revendication 5, dans lequel l'unité d'obtention (501) est configurée pour obtenir, en fonction d'une correspondance entre un paramètre de réseau prédéfini et une taille d'un bloc de données, une taille d'un bloc de données correspondant au paramètre de réseau comme taille du bloc de données suivant.

| Undownloaded area | Undownloaded area | Undownloaded area | Undownloaded area | Undownloaded area |
|---|---|---|---|---|
| Data block 1 | Data block 2 | Data block 3 | ... | Data block N |

FIG. 1

Media player

Connection 1  Connection 2  Connection 3  ...  Connection N

Play device

Thread 1  Thread 2  Thread 3  ...  Thread N

| Data block 1 | Data block 2 | Data block 3 | ... | Data block N |

FIG. 2

| A play device establishes N connections with a server | 301 |

| The play device determines a size of a to-be-downloaded data block in each connection according to a current default parameter | 302 |

| The play device obtains, when N data blocks of a file are downloaded from the server in parallel, a network parameter for downloading at least one data block of the N data blocks in a current network environment, where N is a positive integer greater than or equal to 1 | 303 |

| The play device obtains, after any one of the N data blocks is completely downloaded and before a next data block following the N data blocks starts to be downloaded, a size of the next data block according to the network parameter | 304 |

| The play device downloads the next data block from the server according to the size of the next data block | 305 |

FIG. 3

EP 3 249 891 B1

| | | | | | |
|---|---|---|---|---|---|
| | | | | | Undivided area of a file |
| Data block 1 | Data block 2 | Data block 3 | ... | Data block N | |
| Undownloaded area | Undownloaded area | Undownloaded area | Undownloaded area | Undownloaded area | Undivided area of a file |
| Data block 1 | Data block 2 | Data block 3 | ... | Data block N | |
| Undownloaded area | | Undownloaded area | Undownloaded area | Undownloaded area | Undivided area of a file |
| Data block 1 | Data block 2 | Data block 3 | ... | Data block N | Data block N+1 |
| Undownloaded area | | Undownloaded area | Undownloaded area | Undownloaded area | Undownloaded area | Undivided area of a file |
| Data block 1 | Data block 2 | Data block 3 | ... | Data block N | Data block N+1 |

FIG. 4

5

Play device

Establishment unit ——— 503

Obtaining unit ——— 501

Download unit ——— 502

FIG. 5

6

Play device

163
Receiver

162
Processor

Memory
161

Transmitter
164

FIG. 6

**EP 3 249 891 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011213827 A1
- US 2013095806 A1